# EUROPEAN PATENT SPECIFICATION

(11) **EP 4 349 559 B1**
(45) Date of publication and mention of the grant of the patent: **17.12.2025**
(21) Application number: 23201276.5
(22) Date of filing: 02.10.2023
(51) Int. Cl.: B29B 17/02, B29B 17/04, B29L 31/00

(54) **METHOD FOR RECYCLING A CARTRIDGE FOR USE IN A CARTRIDGE GUN**
VERFAHREN ZUR WIEDERVERWERTUNG EINER KARTUSCHE ZUR VERWENDUNG IN EINER KARTUSCHENPISTOLE
PROCÉDÉ DE RECYCLAGE D'UNE CARTOUCHE DESTINÉE À ÊTRE UTILISÉE DANS UN PISTOLET À CARTOUCHE

(30) Priority: 06.10.2022 BE 202205803
(43) Date of publication of application: 10.04.2024
(73) Proprietor: Soudal NV, 2300 Turnhout (BE)
(72) Inventor: DE SMET, Yves, 2300 Turnhout (BE); THYS, Luc, 2300 Turnhout (BE); BRUGHMANS, Peter Maria Ivan, 2300 Turnhout (BE); LABOTS, Rob, 2300 Turnhout (BE)
(74) Representative: EP&C

(56) References cited:
- KR-A- 20210 147 808
- US-A1- 2004 035 888
- US-B2- 6 464 112
- PAUL RICALDE: "Amazing! Recycle and refill any caulking tube!", 16 September 2015 (2015-09-16), XP093044173, Retrieved from the Internet <URL:https://www.youtube.com/watch?v=wY9I9MQpfSc> [retrieved on 20230503]

## Description

### Technical Field

The present invention relates to a method for recycling used cartridges. Such cartridges, also referred to as tubes, may be used together with a caulking gun. Caulking guns, also known as sealant guns, mortar guns or cartridge guns, are used to easily apply products such as sealant or caulk from a tube in a smooth and controlled manner. The cartridge is mounted inside the gun that is provided with a rod or piston, the rod is then adjusted to apply pressure on the end of the tube that acts as a plunger to force out the contents of the cartridge.

### Background Art

One of the questions often asked is whether the cartridges can be deposited as ordinary waste and/or whether they can be recycled. Unfortunately, no matter how little sealant or adhesive is left in a tube, it is still considered to be hazardous. Builders, contractors, kitchen fitters etc. who regularly use sealants for their trade are therefore responsible for legally disposing of this waste type.

Currently tubes made from high-density polyethylene (HDPE), are used for dispensing the vast majority of sealants & adhesives. They're strong and durable, but they don't biodegrade. It is possible to recycle HDPE, but this process relies on a number of key factors. First and most important is that the waste must be disposed of properly. Unfortunately, the majority of users fail at the first hurdle because it's simply far too easy for their waste to become contaminated and consolidated with other things. Even when waste HOPE cartridges are disposed through the correct waste channel, problems remain. Before the recycling process can begin, the plastic must be completely cleaned of all contaminants.

Most cleaning processes use a float-sink tank system. By floating HDPE in water the tanks can normally remove contaminants. Unfortunately HDPE used in conjunction with sealants & adhesives, is often too heavily contaminated. Stubborn left over product, that in most cases has fully dried and/or cured, can't be separated from the plastic. Ultimately this is what prevents the waste plastic from entering the main recycling process. Without a reliable recycling process, we are left with a problem, which may be at best solved by incineration.

Moreover, there is a growing demand for recycled plastics (PE and PP in particular) for use in sealant cartridges. This is so for at least two reasons: on the one hand to limit the tax burden on virgin plastic consumption, and on the other hand in the context of sustainability (responsible production and consumption), if only to limit the carbon footprint of the packaging materials consumed.

In addition, a key issue in building conditions nowadays is the issue of site waste. Not only does it impact heavily on the environment, the shear costs associated with waste disposal is phenomenal. For instance, it is estimated that over 2 million single use plastic cartridges are put into landfill every week in the UK. Plastics are finding their way into our seas and oceans, and of those plastics that are sent to landfill, some take over a thousand years to breakdown in the soil. There is little doubt that the construction sector and its product suppliers need to take action.

One solution might be to use encase a sealant or similar in a foil sausage, which may be inserted into a plastic re-usable cartridge. However, foils do not provide protection against accidental damage by sharp utensils. Moreover, this does not address the waste disposal issue of the more common cartridges currently in use by professionals in the construction sector and by common handymen.

In KR20210147808 a method is described of regenerating a waste sealant cartridge. The method provides a process step for removing foreign substances attached to the surface of the collected waste cartridge (S100); removal of the closing part together with the plunger adjacent to the discharge port (S200) an internal washing process (S300), and a step (S400) wherein the waste cartridge is divided into a plurality of pieces along the central axis (G). This document does not provide a solution for partly-used cartridges containing residual material inside the cartridge or for unused cartridges that are past their ultimate use date.

In US6464112 a cartridge is described for use with a conventional caulking gun, the cartridge comprising a substantially rigid cartridge body having a cartridge nozzle end, a cartridge plunger end, and a cartridge nozzle edge. The cartridge is optimized for use with 2-components. The issue of re-use is not discussed.

In US2004035888 a replacement caulking tube nozzle is disclosed, having a nozzle portion, integrally formed with a base, having a connecting lip extending downwardly therefrom, the lip intended for inserting within the end of a cut or severed caulking tube, in order to eliminate any of the hardened caulk, from plugging up the tube for further usage.

In the YouTube document "Amazing! Recycle and refill any caulking tube!", of 16 September 2015 Mr. Paul Ricalde shows how a DIY may refill a caulking tube by blowing out its contents, cleaning the tube (not shown) and refilling the same and even adding colour. This is re-use, rather than recycle.

### Summary of the Invention

Accordingly, the present invention relates to a method for recycling a cartridge for use in a cartridge gun, wherein the cartridge is composed of a plastic material and comprises a housing (10) with a front end (16) with an outlet (11), and a back end in the form of a plunger (14), said cartridge containing residual material (13), wherein the method comprises:
- determining the position of the plunger (14) within the housing (10);

cutting the housing (10) transversely to the longitudinal axis of the housing in 4 parts (10.1), (10.2), (10.3) and (10.4), wherein part (10.1) comprises front end (16) with outlet (11);
wherein part (10.2) comprises the part of the housing that contains residual material (13);
wherein part (10.3) comprises the part of the housing that contains plunger (14), and part (10.4) comprises the remainder of the housing;
   - collecting at least one of the parts (10.1), (10.2), (10.3) or (10.4),
   - removing the residual material (13) from the collected part or parts, and
   - reuse of the plastic material of the collected part or parts from which the residual material (13) has been removed.

The disclosure accordingly also relates to cartridges made of material that comprises plastic material recycled from parts (10.1), (10.2), (10.3) and/or (10.4), collected by the method of the present invention. Moreover, the disclosure relates to sealants or adhesives, comprising residual material (13) collected and recycled by the method of the present invention. Such products may be used in a new cartridge, preferably a cartridge whose housing comprises recycled materials.

### Drawings

Figure 1 is a schematic representation of a cartridge containing liquid material as disclosed in KR2021047808.
Figure 2 is a schematic representation of the method of KR20210417808, whereby an empty cartridge is recycled.
Figure 3 is a schematic representation of the method of the current invention, whereby a cartridge containing residual material is recycled.

### Detailed description of the invention

Cartridges, and in particular sealant and adhesive cartridges, are typically tubular-shaped. They are closed at the front end with a fixed wall and at the rear end by a movable wall, acting as plunger. The cartridges may be tipped, containing an integrated dispensing tip or nozzle or be tipless, relying on a dispensing tip integrated in the caulk gun. For instance, the cartridges may have an outlet in the form of a nozzle or a separate nozzle (15) may be fixed to the cartridge. The front end has an orifice or perforation through which contained material is ejected when a compressive force is exerted against the movable rear wall. They are shaped to fit typical caulk or cartridge guns. Cartridges with alternative shapes, containing a closing end that is pushed in to force-out the contents, may be used as well. Also, there is no upper or lower limit to the cross section or length of the cartridge.

The present invention may also be applied with cartridges containing other liquid substances, such as paint and decorative materials and the like. The present invention is particularly suitable for cartridges containing materials that are difficult to remove, such as sealants and adhesives. Such materials are often highly viscous.

Caulk guns are a form of hand tools or apparatus for discharging material from a cartridge loaded into the hand tool through an outlet orifice by pressure. The pressure may be applied by any means, but typically mechanically (manually) or electrically. Caulk guns may be commercially available and well-known to professionals and handymen alike. An early example of a Caulk Gun may be found in US2788159 (1957). Information on caulk gun may be found e.g. in KR2021047808, in DE202006017789, in NL1012240, in US6435373, and in AU2015201377, and the like.

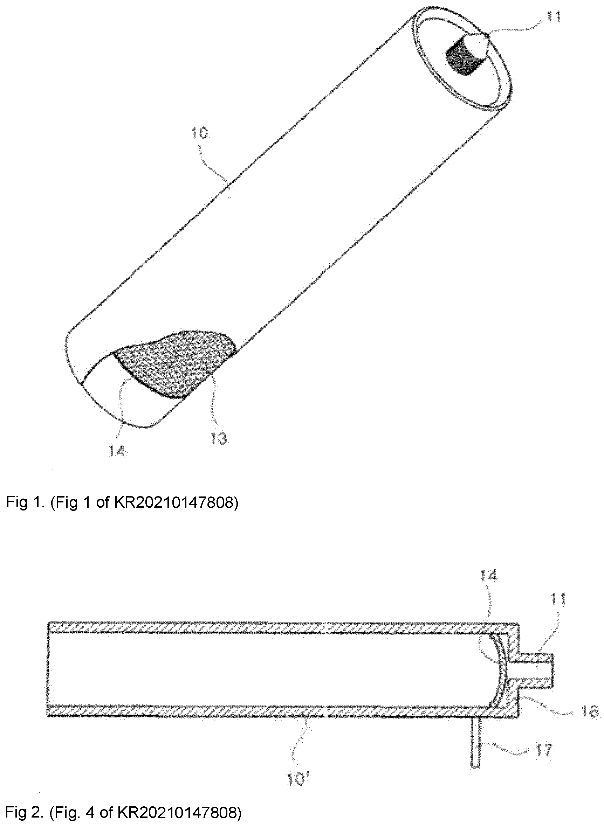

Turning to Fig. 1, a schematic presentation of a cartridge may be found. In Fig. 1, taken from KR2021047808, (10) is the housing of the cartridge, (11) is the outlet that is part of the front end and onto which a nozzle may be screwed, (14) is the plunger acting as back end, and (13) is a sealant.

Turning to Fig. 2 is a schematic representation of the method of KR2021047808 is disclosed, whereby an empty cartridge is recycled. The plunger (14) is adjacent to the front end (16). The front end (16) is cut off together with the plunger (14) at location (17).

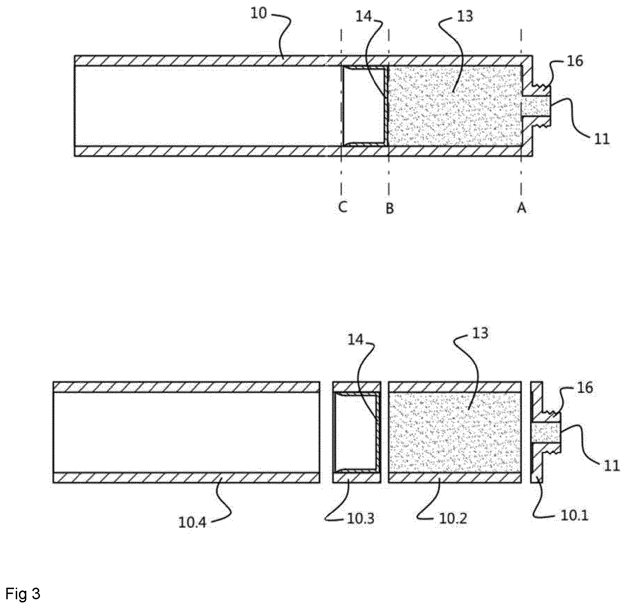

Turning to Fig. 3 a schematic representation of the method of the current invention is provided, wherein a cartridge containing residual material is recycled. The housing (10) of cartridge is cut in four parts at locations A, B and C. Part (10.1) comprises the front end (16) with the outlet (11). If the cartridge is unused, this part is (relatively) clean and the materials of which it is made can be recycled. Part (10.2) comprises a part of the housing (10) that contains the residual material (13). The residual material (13) may be separated and the residual material and the part of the cartridge can each be recycled. Part (10.3) comprises of a part of the housing (10) that contains the plunger (14). The plunger (14) and the part of the cartridge can each be recycled separately. If the plunger and the cartridge are made of the same plastic material, than the combination may be recycled. Part (10.4) is the remaining part of the cartridge. This part is likely the least contaminated by residual material and may be recycled with the least effort, if any, to remove residual material (13). It may be desirable to remove any residual material from the various parts of the cartridge before recycling, e.g., by washing with a suitable solvent.

The current method is preferably applied continuously or semi-continuously. The method is preferably applied in an automated manner, wherein a robot picks cartridges from bulk storage, e.g. 1 at a time, and lines them up on a conveyor belt. Preferably, the cartridges are sorted first. For instance, the cartridges may be sorted based on the plastic material that has been used to produce the cartridge, e.g. PE, PP, PA or a similar thermoplastic. Sorting may be done on the basis of information on the cartridge or by analysis of the plastic material of the cartridge. Suitably optical character recognition software is used in combination with information contained in a database with brand/product names, health and safety labels, etc.; to sort the cartridges by their plastic material. Material information may be contained in barcode and/or QR codes printed on the cartridge, or using unique combinations of chemical markers in the coating on the cartridge, or as recycling code on the cartridge itself. The cartridges may also be sorted on the materials, e.g., sealant or adhesive, contained therein. For instance, for a sealant type cartridge, cartridges may be split into silicone-type, acrylic-type, hybrid polymer-based, polyurethane and other. Again, this may be done on the basis of information on the cartridge. The cartridges may be sorted on the amount of residual material contained therein, for example, by assessment by weight. Moreover, the cartridges may be sorted on the state of the material remaining inside the cartridge (uncured, fully cured, and any gradation in between). One way to make this assessment would be based on the remaining shelf life printed on the cartridge, and/or based on whether the cartridge has been opened or not. In a preferred embodiment, the cartridges are first sorted by the material contained therein. This facilitates the cleaning process and re-use of residual materials contained within the cartridges.

In an automated method preferably all cartridges are aligned identically and positioned on a conveyor belt with front ends pointing in the same direction.

Part (10.1), with front end (16) of the cartridge, may be removed at location (A) e.g., with the use of a single cutter or a plurality of cutters. The cartridge is cut transversely to the central axis of the cartridge. During the cutting operation the conveyor belt may be temporarily halted. During this operation, the front end (16) , with outlet (11) is removed. The outlet may be in the form of a nozzle, or a nozzle tip (15) may be screwed on top. The nozzle tip (15), if present, may be removed in a separate operation or processed together with the front end (16). The nozzle tip (15), if present, will typically contain residual material (13) that may have hardened and may be hard to re-use. If incineration is the only option, then by this method only a very minor part of a spent cartridge is incinerated, which is an important improvement of the present invention.

The back end of the cartridge, part (10.4) may be removed at location (C), after plunger (14), e.g. with the use of a single cutter or a plurality of cutters. This may be the same cutter or cutters used for the removal of the front end part. The back end part of the cartridge is relatively clean and may be recycled for use as such, or after a mild cleaning.

The part of the housing containing the plunger (10.3) may be separated by cutting the cartridge at location (B) just before the plunger (14). Note that the position of the plunger (14), i.e. the movable rear wall that may have been forced into the housing (10) during use, may be measured or determined in various ways. For instance, its position may be determined by measurement the length of the back end portion of the cartridge, e.g., with the aid of a(n optical) sensor, by the weight of the cartridge, by the momentum of a cartridge or by exerting a force onto the surface of the cartridge transversely to its central axis. The more accurate the manner of determining the position of the plunger, the closer one can cut the cartridge before (location B) and after the plunger (location C). Preferably the position is determined by way of a sensor that enters the cartridge from the back and measures the distance travelled by the sensor before it is stopped by the plunger. Locations (B) and (C) will therefore differ from cartridge to cartridge. In an automated process, the conveyor belt preferably positions each cartridge based on the relative location of the plunger contained therein. In an automated process, a single conveyor belt or multiple conveyor belts may be used.

The part of the housing (10) that is left, part (10.2), will contain residual material (13). This residual material may be removed, e.g. with an abrasive brush. Alternatively, it may be removed with a drill/rotating disk, e.g. with a diameter slightly larger than the inner diameter of the cartridge. The residual material (13) which so far has been sealed inside a closed cartridge may be collected. Depending on its composition it may be chemically recycled as such, or after an further treatment.

Note that the sequence of steps may be changed. Moreover, it is also possible to perform two or more steps at the same time, in which case a plurality of cutters is used.

The present invention also concerns an assemblage for recycling cartridge comprising one or more conveyor belts; one or more cutting stations with one or more cutters and with means to remove the parts separated from the cartridge; with a station to collect the residual material (13) contained within part (10.2) of the cartridge, and controlled by a processing unit that determines the locations (B) and (C) for each cartridge, depending on the location of its plunger (14). Preferably the assemblage also includes at least one sorting station to sort the cartridge based on the material it is made of, and/or based on the material contained therein and/or based on the state of the material contained therein.

For instance, a cartridge, containing a residual amount of sealant (13) within housing (10) may be placed with preselected similar cartridges on a conveyor belt. The cartridges may be transported to a first cutting station wherein part (10.1) including the front end is cut away from the cartridge. The nozzle tip (15), if any, may be cut away from the front end. The remainder of the cartridge may then transported to a second cutting station wherein part (10.4), after location (C) is cut away. The remainder of the cartridge may then be transported to a third cutting station wherein part (10.3) containing the plunger (14) is cut away. The cutting stations may be controlled by an operating unit that determines the position of the plunger (14) in each cartridge and hence the positions A, B and C where the cartridge should be cut. Stations with a dual cutter, e.g. with a fixed position B and C, may be used. The remainder of the cartridge, part (10.2) containing residual material (13), may then be transported to a cleaning station wherein the residual material inside the remaining part of the cartridge is removed and collected and the remaining part of the cartridge is separately collected. After removal of the residual material (13), the parts (10.1), (10.2), (10.3) and/or (10.4) of the cartridge may be combined. The plastic used in the cartridge, PE for example, can be shredded, and then melted and pelletized. Melting is a preferred process step, as in this case ink and/or other volatile components such as potential sealant residues (such as silicones - which are notorious contaminants due to their low surface tension) break down and/or evaporate. A melting step therefore results in a higher quality recycled plastic.

The residual material (13) may also be collected and recycled, in particular if the cartridges have been sorted on the basis of the material contained therein. A model example of recycled sealant is provided below.

The disclosure accordingly also relates to cartridges made of material that comprises plastic material recycled from parts (10.1), (10.2), (10.3) and/or (10.4), collected by the method of the present invention. Moreover, the disclosure relates to sealants or adhesives, comprising residual material (13) collected and recycled by the method of the present invention. Such products may be used in a new cartridge, preferably a cartridge whose housing comprises recycled materials.

### Example chemical recycling in the case of hybrid sealants:

A film of 5 mm by 5 mm by 2 mm of a commercial hybrid sealant named Fix All High Tack (Soudal) was fully cured. 1 gram of this material was mixed with 10 ml of a solvent (methanol) and stirred for 4 hours at 28C. After centrifugation a liquid and solid phase (consisting of mainly calcium carbonate) and liquid phase (polymer, plasticizer, rheology additive) could be separated. Subsequently these recovered raw materials can be used in a sealant formulation of the same or a different commercially available product.

The embodiments described above are to be understood as illustrative.

## Claims

1. A method for recycling a cartridge for use in a cartridge gun, wherein the cartridge is composed of a plastic material and comprises a housing 10 with a front end 16 with an outlet 11, and a back end in the form of a plunger 14, said cartridge containing residual material 13, wherein the method comprises:
- determining the position of the plunger 14 within the housing 10;
- cutting the housing 10 transversely to the longitudinal axis of the housing in 4 parts 10.1, 10.2, 10.3 and 10.4, wherein part 10.1 comprises front end 16 with outlet 11, wherein part 10.2 comprises the part of the housing that contains residual material 13, wherein part 10.3 comprises the part of the housing that contains plunger 14 and part 10.4 comprises the remainder of the housing;
- collecting at least one of the parts 10.1, 10.2, 10.3 or 10.4,
- removing the residual material 13 from the collected part or parts, and
- reuse of the plastic material of the collected part or parts from which the residual material 13 has been removed.

2. The method of claim 1, wherein the parts 10.2, 10.3 and 10.4 are collected and the plastic material thereof is reused, after removal of any residual material 13.

3. The method of any one of claims 1 or 2, wherein the residual material 13 is collected and reused.

4. The method of any one of claims 1-3, wherein the method is applied continuously or semi-continuously.

5. The method of any one of claims 1-4, applied in an automated manner, wherein a robot picks cartridges from bulk storage and lines them up on a belt, preferably aligned identically and more preferably positioned on a conveyor belt with front ends pointing in the same direction.

6. The method of claim 5, wherein the cartridges are sorted based on the plastic material that has been used to produce the cartridge, preferably sorted on PE, PP, PA or other thermoplastic.

7. The method of claim 5 or 6, wherein the cartridges are sorted based on the material 13 therein contained, preferably sorted on silicone-type, acrylic-type, hybrid polymer-based, polyurethane or other.

8. The method of claim 7, wherein the cartridges are sorted based on the state of the material 13 remaining inside the cartridge, preferably sorted on uncured, fully cured, and any gradation in between.

9. The method of any one of claims 5-8, wherein sorting is done on the basis of information on the cartridge and/or by analysis of the plastic material of the cartridge, and/or by analysis of the remaining material 13 inside the cartridge.

10. The method of claim 9, wherein sorting is done based on brand/product names, health and safety labels, based on material information contained in barcode and/or QR codes printed on the cartridge, based on unique combinations of chemical markers in the coating on the cartridge, or as a recycling code on the cartridge itself.

11. The method of claim 10, wherein sorting is done with the aid of optical character recognition software, preferably in combination with information contained in a database.

12. An assemblage for recycling a cartridge for use in a cartridge gun by the method of any one of claims 1-11, comprising one or more conveyor belts, one or more cutting stations with one or more cutters transversely to the one or more conveyor belts and with means to remove the parts separated from the cartridge and with a station to collect the residual material 13 contained within part 10.2 of the cartridge, controlled by a processing unit that determines the locations B, before the plunger 14, and C, after the plunger 14, for each cartridge, depending on the location of its plunger 14.

13. The assemblage of claim 12, further comprising at least one sorting station.

## Patentansprüche

1. Verfahren zur Wiederverwertung einer Kartusche zur Verwendung in einer Kartuschenpistole, wobei die Kartusche aus einem Kunststoffmaterial besteht und ein Gehäuse 10 mit einem vorderen Ende 16 mit einem Auslass 11 und einem hinteren Ende in Form eines Kolbens 14 umfasst, wobei die Kartusche Restmaterial 13 enthält, wobei das Verfahren Folgendes umfasst:
- Bestimmen der Position des Kolbens 14 im Gehäuse 10;
- Schneiden des Gehäuses 10 quer zur Längsachse des Gehäuses in 4 Teile 10.1, 10.2, 10.3 und 10.4, wobei Teil 10.1 das vordere Ende 16 mit dem Auslass 11 umfasst, wobei Teil 10.2 den Teil des Gehäuses umfasst, der das Restmaterial 13 enthält, wobei Teil 10.3 den Teil des Gehäuses umfasst, der den Kolben 14 enthält und Teil 10.4 das restliche Gehäuse umfasst;
- Auffangen mindestens eines der Teile 10.1, 10.2, 10.3 oder 10.4,
- Entfernen des Restmaterials 13 aus dem oder den aufgefangenen Teil oder Teilen und
- Wiederverwenden des Kunststoffmaterials des oder der aufgefangenen Teils oder Teile, aus dem oder denen das Restmaterial 13 entfernt wurde.

2. Verfahren nach Anspruch 1, wobei die Teile 10.2, 10.3 und 10.4 aufgefangen werden und das Kunststoffmaterial davon nach dem Entfernen des Restmaterials 13 wiederverwendet wird.

3. Verfahren nach einem der Ansprüche 1 oder 2, wobei das Restmaterial 13 aufgefangenen und wiederverwendet wird.

4. Verfahren nach einem der Ansprüche 1-3, wobei das Verfahren kontinuierlich oder halbkontinuierlich angewendet wird.

5. Verfahren nach einem der Ansprüche 1-4, das automatisiert angewendet wird, wobei ein Roboter Kartuschen aus einem Großbehälter nimmt und sie auf einem Band aufreiht, vorzugsweise identisch ausgerichtet und weiter bevorzugt mit den vorderen Enden in dieselbe Richtung zeigend auf einem Förderband positioniert.

6. Verfahren nach Anspruch 5, wobei die Kartuschen basierend auf dem Kunststoffmaterial sortiert werden, das verwendet wurde, um die Kartusche herzustellen, vorzugsweise sortiert nach PE, PP, PA oder einem anderen Thermoplast.

7. Verfahren nach Anspruch 5 oder 6, wobei die Kartuschen basierend auf dem darin enthaltenen Material 13 sortiert werden, vorzugsweise nach Silikontyp, Acryltyp, polymerbasierten Hybrid, Polyurethan o. a sortiert werden.

8. Verfahren nach Anspruch 7, wobei die Kartuschen basierend auf dem Zustand des in der Kartusche verbleibenden Materials 13 sortiert werden, vorzugsweise nach nicht ausgehärtet, vollständig ausgehärtet und jedem Zustand dazwischen sortiert werden.

9. Verfahren nach einem der Ansprüche 5-8, wobei das Sortieren basieren auf Informationen auf der Kartusche und/oder durch Analyse des Kunststoffmaterials der Kartusche und/oder durch Analyse des Restmaterials 13 in der Kartusche erfolgt.

10. Verfahren nach Anspruch 9, wobei das Sortieren basierend auf Marken-/Produktnamen, Gesundheits- und Sicherheitsetiketten, basierend auf im auf die Kartusche gedruckten Strichcode und/oder QR-Code enthaltenen Materialinformationen, basierend auf eindeutigen Kombinationen chemischer Marker in der Beschichtung auf der Kartusche oder als Wiederverwertungscode auf der Kartusche selbst erfolgt.

11. Verfahren nach Anspruch 10, wobei das Sortieren mit Hilfe einer optischen Zeichenerkennungssoftware, vorzugsweise in Kombination mit in einer Datenbank enthaltenen Informationen erfolgt.

12. Baugruppe zum Wiederverwerten einer Kartusche zur Verwendung in einer Kartuschenpistole mittels des Verfahrens nach einem der Ansprüche 1-11, umfassend ein Förderband oder mehrere Förderbänder, eine oder mehrere Schneidestationen mit einem oder mehreren Schneideelementen quer zu dem einen Förderband oder den mehreren Förderbändern und mit Einrichtungen zum Entfernen der von der Kartusche getrennten Teile und mit einer Station zum Auffangen des in Teil 10.2 der Kartusche enthaltenen Restmaterials 13, gesteuert durch eine Verarbeitungseinheit, welche die Position B, vor dem Kolben 14, und C, nach dem Kolben 14, für jede Kartusche je nach Position deren Kolbens 14 bestimmt.

13. Baugruppe nach Anspruch 12, ferner mindestens eine Sortierstation umfassend.

## Revendications

1. Procédé pour recyclage d'une cartouche pour utilisation dans un pistolet à cartouche, dans lequel la cartouche est composée d'un matériau plastique et comprend un logement (10) avec une extrémité avant (16) avec une sortie (11), et une extrémité arrière sous la forme d'un piston plongeur (14), ladite cartouche contenant un matériau résiduel (13), dans lequel le procédé comprend :
- la détermination de la position du piston plongeur (14) à l'intérieur du logement (10) ;
- la découpe du logement (10) transversalement à l'axe longitudinal du logement en 4 parties (10.1, 10.2, 10.3 et 10.4), dans lequel la partie (10.1) comprend une extrémité avant (16) avec la sortie (11), dans lequel la partie (10.2) comprend la partie du logement qui contient le matériau résiduel (13), dans lequel la partie (10.3) comprend la partie du logement qui contient le piston plongeur (14), et la partie (10.4) comprend le reste du logement ;
- la collecte d'au moins une des parties (10.1, 10.2, 10.3 ou 10.4),
- l'enlèvement du matériau résiduel (13) de la partie ou des parties collectée(s), et
- la réutilisation du matériau plastique de la partie ou des parties collectée(s) de laquelle (desquelles) le matériau résiduel (13) a été enlevé.

2. Procédé de la revendication 1, dans lequel les parties (10.2, 10.3 et 10.4) sont collectées et le matériau plastique de celles-ci est réutilisé, après l'enlèvement de tout matériau résiduel (13).

3. Procédé de l'une quelconque des revendications 1 ou 2, dans lequel le matériau résiduel (13) est collecté et réutilisé.

4. Procédé de l'une quelconque des revendications 1 à 3, dans lequel le procédé est appliqué de façon continue ou de façon semi-continue.

5. Procédé de l'une quelconque des revendications 1 à 4, appliqué de manière automatisée, dans lequel un robot ramasse des cartouches depuis un stockage en vrac et les aligne sur une courroie, de préférence alignées de façon identique, et mieux encore positionnées sur une courroie transporteuse avec des extrémités avant orientées dans la même direction.

6. Procédé de la revendication 5, dans lequel les cartouches sont triées sur la base du matériau plastique qui a été utilisé pour produire la cartouche, de préférence triées selon PE, PP, PA ou un autre thermoplastique.

7. Procédé de la revendication 5 ou 6, dans lequel les cartouches sont triées sur la base du matériau (13) contenu dans celles-ci, de préférence triées selon un type silicone, un type acrylique, à base de polymère hybride, polyuréthane, ou autre.

8. Procédé de la revendication 7, dans lequel les cartouches sont triées sur la base de l'état du matériau (13) restant à l'intérieur de la cartouche, de préférence triées selon un état non durci, complètement durci, et toute gradation entre ceux-ci.

9. Procédé de l'une quelconque des revendications 5 à 8, dans lequel le tri est effectué sur la base d'informations sur la cartouche et/ou par analyse du matériau plastique de la cartouche, et/ou par analyse du matériau restant (13) à l'intérieur de la cartouche.

10. Procédé de la revendication 9, dans lequel le tri est effectué sur la base de noms de marque/de produit, d'étiquettes de santé et de sécurité, sur la base d'informations de matériau contenues dans un code à barres et/ou des codes QR imprimés sur la cartouche, sur la base de combinaisons uniques de marqueurs chimiques dans le revêtement sur la cartouche, ou sous forme de code de recyclage sur la cartouche elle-même.

11. Procédé de la revendication 10, dans lequel le tri est effectué à l'aide d'un logiciel de reconnaissance optique de caractères, de préférence en association avec des informations contenues dans une base de données.

12. Assemblage pour recycler une cartouche destinée à être utilisée dans un pistolet à cartouche, par le biais du procédé de l'une quelconque des revendications 1 à 11, comprenant une ou plusieurs courroies transporteuses, une ou plusieurs stations de découpe avec un ou plusieurs dispositifs de découpe transversalement à l'une ou aux plusieurs courroies transporteuses et avec des moyens pour enlever les parties séparées de la cartouche et avec une station pour collecter le matériau résiduel (13) contenu à l'intérieur de la partie (10.2) de la cartouche, commandé par une unité de traitement qui détermine les emplacements (B), avant le piston plongeur (14), et (C), après le piston plongeur (14), pour chaque cartouche, en fonction de l'emplacement de son piston plongeur (14).

13. Assemblage de la revendication 12, comprenant en outre au moins une station de tri.
